Europäisches Patentamt

European Patent Office

Office européen des brevets

(19)

(11) EP 0 867 628 A2

(12) EUROPEAN PATENT APPLICATION

(43) Date of publication:
30.09.1998 Bulletin 1998/40

(51) Int Cl.6: F16C 39/06

(21) Application number: 98850042.7

(22) Date of filing: 25.03.1998

(84) Designated Contracting States:
AT BE CH DE DK ES FI FR GB GR IE IT LI LU MC
NL PT SE
Designated Extension States:
AL LT LV MK RO SI

(30) Priority: 26.03.1997 SE 9701131

(71) Applicant: SKF Nova AB
412 88 Göteborg (SE)

(72) Inventors:
• Lindskog, Anders
  413 23 Göteborg (SE)
• Reel, Dirk
  9280 Lebbeke (BE)
• Gebert, Karl
  97469 Gochsheim (DE)

(74) Representative: Westman, P. Börje I.
SKF Group Headquarters
Innovation & Patents
S-415 50 Göteborg (SE)

(54) **A bearing arrangement for a rotatable shaft**

(57)    A bearing arrangement for a rotatable shaft (1) carrying means arranged for performing a work during rotation of said shaft, the shaft being supported radially in at least one radial bearing (3) permitting movement of the shaft in axial direction and means provided for supporting the shaft in axial direction, whereby the means supporting the shaft in axial direction is an element (6) fixedly attached to the shaft for rotation together with this, the element (6) being arranged to be influenced by electro-magnetic forces emanating from a stationary position and under influence from a control device (12) acted upon by sensor means (11) arranged to sense the current axial position of the shaft, for exact axial positioning of the shaft and continuous axial adjustment for position changes required for optimizing the result of the work performed by the means carried by the shaft.

FIG.1

## Description

The invention relates to a bearing arrangement for a rotatable shaft, which is carrying means arranged for performing a work during rotation of said shaft, the shaft being supported radially in at least one radial bearing permitting movement of the shaft in axial direction and means provided for supporting the shaft in axial direction.

## BACKGROUND OF THE INVENTION

Axial clearance often results in decreased performance in devices using bearings. Therefore it is motivated to pursue attempts to decrease the negative effects of axial clearance. These problems can occur in e.g. printing machines and compressors. Also, in manufacturing processes of various sorts, such as chip removal processes, e.g. grinding and milling processes, it is common that the machines used or parts of them have to be moved a certain amount, e.g. when inserting new material to be ground by a grinding machine, moving cutting tool, etc. Moving the machines or parts of the machines is a time- and energy-consuming activity.

In a grinding machine the headstock is supporting the rotatable grinding spindle. In a conventionally supported machinery of this kind the motions which the grinding wheel carried by the spindle must perform during grinding operation involves axial motion, which means, that the entire headstock with spindle and grinding wheel must move axially, often rapidly and with rather short movements. This means that the entire mass of the headstock, the spindle and the grinding wheel must be displaced rapidly, which requires very stiff and clearance-free bearing arrangements and a powerful driving motor.

In a screw-compressor of the type where two helically grooved shafts are arranged in parallel and rotate in opposite directions in a chamber for creating an increased pressure in a medium contained in the chamber, thus that the pressure at the outlet side of the chamber is lower than at the entrance side, it is also very important that the grooved portion of the screws are positioned in a precise and optimum manner in relation to the chamber wall at the outlet opening.

In the EP 0578 285 A1, relating to a turbomachine with active tip-clearance control, an electromagnetic actuator is used to magnetically attract a thrust plate on the rotor against a net dynamic force produced on the rotor during the operation of the machine. A control system of the actuator controls the magnetic attraction of the actuator in response to signals from a position sensor measuring the actual magnitude of the axial clearance gap, so as to maintain the actual axial clearance gap at a predetermined magnitude.

EP 0 355 796 A2 refers to a centrifugal pump having magnetic bearing arranged to support the impeller shaft during normal operation. The impeller shaft is also supported in two touch-down ball bearings, which are intended to take over the supporting of the impeller shaft when the pump comes to rest and at start up thereof. Thus the main bearing for the impeller shaft according to this disclosure is a magnetic bearing, whereas the ball bearings are just auxiliary bearings.

## PURPOSE AND MOST ESSENTIAL FEATURES OF THE INVENTION

A purpose of the present invention is to provide a bearing arrangement for a rotatable shaft, carrying means arranged for performing a work during rotation of said shaft, the shaft being supported radially in at least one radial bearing permitting movement of the shaft in axial direction and means provided for supporting the shaft in axial direction, which bearing arrangement makes possible exact axial positioning of the shaft and continuous axial adjustment for position changes required for optimizing the result of the work performed by the means carried by the shaft, and this is achieved with a bearing arrangement as defined in claim 1, whereby the bearing arrangement constitutes a hybrid bearing arrangement using both electro-magnetic bearings and other types of bearings, such as rolling bearings, sliding bearings or the like, for supporting a shaft or sopindle under normal operation.

Another purpose is to provide such a bearing arrangement for a grinding machine spindle for eliminating the above discussed problem with displacement of a heavy mass in conventional grinding machines, and this is achieved with the features defined in claim 2.

A further purpose of the present invention is to provide a bearing arrangement for obviating the problems at screw-compressors discussed above, and this is achieved by the features defined in the accompanying claim 3. The invention thereby provides the possibility of only moving a shaft of a machine in axial direction instead of moving the whole machine or a major part of it.

## DESCRIPTION OF THE DRAWINGS

Hereinafter the invention will be further described with reference to the appended drawings presenting preferred embodiments.

Figure 1 is a longitudinal cross sectional view of a device for axial movement and positioning of a rotatable grinding machine spindle according to this invention.

Figure 2 is a longitudinal cross sectional view of a screw compressor incorporating a device for axial movement and positioning of a rotary shaft according to this invention.

## DESCRIPTION OF PREFERRED EMBODIMENTS

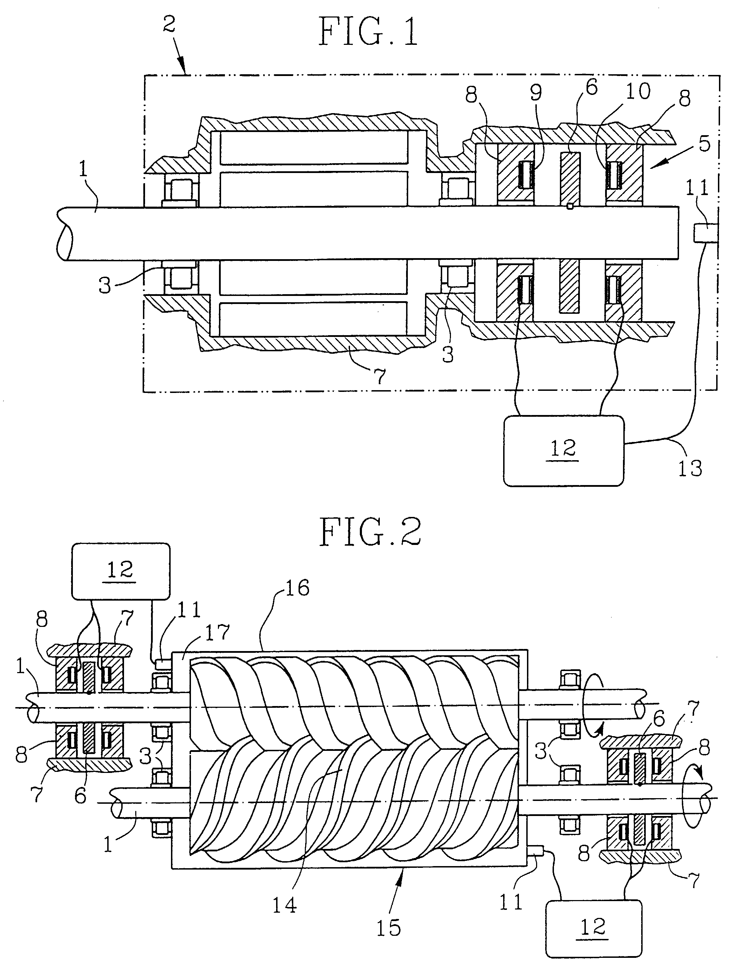

In figure 1, a first embodiment according to the invention is disclosed for axial movement and high precision positioning of a rotary grinding machine spindle 1 in a stationary machinery unit 2, i.e. the headstock of a grinding machine. The spindle or shaft 1 of the unit 2 is supported in radial bearings 3, which can be of standard character, and being displaceable in axial direction, e. g. by axial bearing play. Although this radial supporting is illustrated in the drawing as two spaced apart cylindrical roller bearings, it is apparent that a similar effect can be obtained with only one such bearing or with one or more bearings of other non-magnetic types. The shaft 1 of the machinery unit 2 is provided with at least one magnetic actuator 5, which includes at least one rotor 6, and at least one stator 8. The rotor 6 in the housing 7 is fixed to the shaft 1 and two stators 8 are arranged on both sides of and on distance to the rotor 6 in the stationary machinery unit 2. The rotor 6 has magnetic properties and the stators 8 are provided with magnetic field generating means 9, enabling them to interact with each other by magnetic force.

The axial movement and high precision positioning of the shaft 1 is controlled by the magnitude of the magnetic field caused by the magnetic field generating means. In the case of one stator 8 located on each side of the rotor 6, the shaft 1 is subjected to two attracting forces of opposite directions. Thus, the rotor 6 is in an instable equilibrium. In order to cause an axial movement, the magnetic field of the stator on one side can be increased or the magnetic field of the stator on the other side be decreased resulting in a resultant magnetic force causing the shaft 1 to move axially. When the shaft 1 has reached its new axial position, the magnetic fields of the two stators are set equal provided that there are no other forces involved. If there are other forces involved then the magnetic fields are not set equal since the resultant of all forces must be zero in order for the system to reach an equilibrium which results in that the forces provided by the magnetic field generating means are not identical. For high precision positioning, these moving steps can be iteratively used with smaller incremental steps in the axial direction. Also the movement and high precision positioning can be achieved in a continuous manner. The at least one stator 8 is activated by a control system controlling the magnetic fields of the stators 8 provided by the magnetic field generating means. It should be noted that contact between the rotor 6 and at least one stator 8 may be desired. Therefore, a sacrificial surface of e.g. teflon or graphite can be arranged on the rotor 6 or at least one stator 8.

A modification of the invention according to figure 1 is that the rotor 6 and/or the stators 8 are axially displaceably arranged in relationship to the shaft 1 and the machinery unit 2, respectively. This modification results in the possibility to extend the range of axial movement of the shaft 1 of the device. This possibility is of great use in e.g. chip removal processes in which the shaft may be needed to be moved a longer distance than what is possible by the attracting magnetic force or, in the case of double stators, the distance between the stators 8. Thus, by arranging the rotor 6 and/or the stators 8 displaceably, such a device would allow a longer axial working range than the one referred to in figure 1.

The mentioned radial bearings 3 are standard roller bearings, with flangeless rings, needle roller bearings, hydrostatic bearings or other so called clearance bearings. The rotor 6 is in the form of a disk. However, it also possible that the rotor 6 has a conical form, and the stators 8 has a supplemental form or other forms. When appropriate the actuator 5 is arranged to operate as an axial magnetic bearing in at least one end position of the shaft 1.

In some cases the actuator 5 includes restoring means which are provided to restore the shaft 1 in one direction. Thus, the actuator 5 moves the shaft 1 in one direction and the restoring means moves the shaft 1 in the other direction. The restoring means can consist of e.g. a spring, a hydraulic or pneumatic means or similar.

The invention also includes a sensor 11 arranged to measure the axial position of the shaft 1 and transmitting a signal describing the axial position of the shaft 1 to a control device 12. The sensor can be arranged at the end of the shaft 1 measuring the position of the shaft 1 by means of e.g. a laser. An alternative positioning of the sensor 11 is on the side of the shaft 1 using e.g. markers on the shaft for indicating the axial position of the shaft 1. Another alternative sensor could be arranged to measure and to process properties of the magnetic field in order to obtain the axial position of the shaft 1 according to the following relation.

$$di/dt = u/L,$$

where
di/dt is the time derivative of the current, u the potential difference and L the inductance of the magnetic field generating means. The inductance L varies with the distance, i.e. from the inductance L it is possible to obtain the distance. Thus, the sensor 11 measures the axial position, e.g. according to at least one of the alternatives presented above, and transmits a signal describing the axial position via a connection to the control device 12. The control device is arranged to adjust the magnetic field generating means according to the measured axial position of the shaft 1 measured by the sensor and the presently desired value of the axial position. The actual controlling function of the control device can be implemented in various ways, e.g. using regulators of previously known type, such as PID regulators.

The control device transmits a control signal via another connection to at least one stator 8. Adjusting the magnetic field generating means leads to adjusting the magnitude of the magnetic field of at least one stator 8, which leads to an axial movement of the shaft 1. The present invention also includes a gap between said stator 8 and said rotor 6.

With a bearing arrangement as specified, i.e. with a combination of standard rolling bearings or the like for supporting the shaft or spindle in radial direction and means fitted to the shaft and arranged to be axially supported in a moveable manner by means of electromagnetic force, the above mentioned problem discussed in relation to a grinding machine spindle is eliminated.

It should be noted that the invention can be used in a number of applications, such as printing machines, milling, grinding and turning processes, where only the spindle is oscillated in axial direction. With the new concept only the shaft has to be moved, which weights only a fraction of the mass that has to be moved in conventional machines.

Figure 2 shows a second embodiment of the present invention, namely a screw compressor 14 incorporating two separate devices for axial movement and positioning of two rotary shafts. The screw compressor 14 is provided with two devices according to the invention, which in this case are identical, but one reversed, i.e. rotated 180 degrees and arranged so that the compressing means 15 arranged on both shafts become adjacent. A housing 16 contains the compressing means 15, the fluid 17 and partly the shafts 1a and 1b. As the shafts revolve in opposite directions a compressive effect in the fluid 17 is created by use of the compressing means 15. A drawback of screw compressors in the prior art is that the axial play of the screws is too big which results in decreased performance. A way to increase the performance is to axially locate the screws as far as possible toward the high pressure end of the housing 16. If the fluid to be compressed is warm then there is a risk of thermal expansion. The possibility to adjust the shaft axially decreases the negative effects of thermal expansion in axial direction. These objects are achieved by the screw compressor in figure 2, which is based on the device according to the invention.

It should be noted that the preferred embodiments presented above only serve as examples and that they do not limit the scope of this invention.

**Claims**

1. A bearing arrangement for a rotatable shaft (1) carrying means arranged for performing a work during rotation of said shaft, the shaft being supported radially in at least one radial bearing (3) permitting movement of the shaft in axial direction and means provided for supporting the shaft in axial direction, **characterized therein** that the means supporting the shaft in axial direction is an element (6) fixedly attached to the shaft for rotation together with this, the element (6) being arranged to be influenced by electro-magnetic forces emanating from a stationary position and under influence from a control device (12) acted upon by sensor means (11) arranged to sense the current axial position of the shaft, for exact axial positioning of the shaft and continuous axial adjustment for position changes required for optimizing the result of the work performed by the means carried by the shaft.

2. A bearing arrangement as claimed in claim 1, **characterized therein,** that the shaft (1) is a grinding machine spindle requiring a stiff supporting in radial direction and an axial adjustability for continuous position changes required for optimizing the grinding result.

3. A bearing arrangement as claimed in claim 1, **characterized therein,** that the shaft (1) is carrying a first screw member of a screw compressor (14) for fluid and together with a another shaft rotatably arranged in parallel with the first shaft (1) and also carrying a second screw member being arranged in a housing (16) having a first end of lower fluid pressure and a second end of higher fluid pressure under operation, said shafts being supported radially in such a manner that the two shafts are parallel and positioned thus that the screw members interact within the housing (16), each one of the shafts being supported radially in bearings (3) positioned outside the housing, the radial bearings of at least one of the shafts allowing axial movement of the shaft, and this shaft being provided with the magnetic bearing for continuously optimizing the position of the screw members in relation to the housing.

4. A bearing arrangement as claimed in anyone of the preceeding claims, **characterized therein** that the said element (6) is in the form of a disk, attached concentric about the shaft, and being influenced by electro-magnetic forces generated by electro-magnets (9, 10) positioned on opposite axial sides of the disk, and arranged to attract the disk by being energized.

5. A bearing arrangement as claimed in anyone of the preceding claims, **characterized therein** that a sensor (11) is arranged to measure the axial position of the shaft (1) and transmitting a signal describing the axial position of the shaft (1) to a control device (12).

6. A bearing arrangement as claimed in claim 5, **characterized therein** that the control device (12) is arranged to transmit a control signal to at least the element (6) fixedly attached to the shaft, or to means (8) generating said electromagnetic forces, for controlling the magnitude of the magnetic field and thereby controlling the axial movement and the positioning of

the shaft (1).

# FIG.1

# FIG.2